# EUROPÄISCHE PATENTSCHRIFT

(11) **EP 2 589 522 B1**
(45) Veröffentlichungstag und Bekanntmachung des Hinweises auf die Patenterteilung: **02.04.2025**
(21) Anmeldenummer: 12189872.0
(22) Anmeldetag: 25.10.2012
(51) Int. Cl.: B60W 40/107, B60W 40/11, B60W 40/076

(54) **Verfahren zum Verarbeiten eines Signals eines Längsbeschleunigungssensors in einem Fahrzeug, sowie Fahrzeug**
Method for processing a signal from a longitudinal acceleration sensor in a vehicle, and vehicle
Procédé pour traiter un signal d'un capteur d'accélération longitudinale dans un véhicule, ainsi que véhicule

(30) Priorität: 07.11.2011 DE 102011085854
(43) Veröffentlichungstag der Anmeldung: 08.05.2013
(73) Patentinhaber: Robert Bosch GmbH, 70442 Stuttgart (DE)
(72) Erfinder: Greimann, Ferdinand, 74076 Heilbronn (DE)

(56) Entgegenhaltungen:
- EP-A1- 1 298 020
- EP-A1- 1 935 733
- DE-A1- 102007 061 811

## Beschreibung

### GEBIET DER ERFINDUNG

Die vorliegende Erfindung betrifft ein Verfahren zum Verarbeiten eines Längsbeschleunigungssignals, das von einem Längsbeschleunigungssensor in einem Fahrzeug bereitgestellt wird. Die Anmeldung betrifft ferner ein entsprechendes Fahrzeug.

### STAND DER TECHNIK

In modernen Fahrzeugen wird der Fahrer von verschiedenen Assistenzsystemen beim Steuern des Fahrzeugs unterstützt, um sowohl die Sicherheit als auch den Komfort für den Fahrer zu erhöhen. Beispielsweise lässt sich durch die Verwendung eines Antiblockiersystems (ABS) oder eines elektronischen Stabilisierungsprogramms (ESP) die Sicherheit des Fahrzeugs erheblich erhöhen. Hierfür verwendete Steuergeräte nutzen vielfältige Informationsquellen, um einen aktuellen Status des Fahrzeugs zu bestimmen und daraus resultierend Maßnahmen zur Erhöhung der Fahrsicherheit zum Beispiel durch gezieltes Abbremsen von Rädern oder Reduzieren von Kraftbeaufschlagungen auf bestimmte Räder zu erreichen.

Um beispielsweise eine aktuell auf das Fahrzeug wirkende Längsbeschleunigung, das heißt, eine Beschleunigung entlang der Fahrzeuglängsrichtung, bestimmen zu können, werden ein oder mehrere Längsbeschleunigungssensoren in dem Fahrzeug angeordnet. Diese Sensoren sind typischerweise dazu ausgestaltet und derart angeordnet, dass mit ihrer Hilfe Beschleunigungen, die in einer Richtung parallel zu einem Untergrund, auf dem das Fahrzeug fährt bzw. steht, wirken, gemessen werden können.

Beispielsweise können die Signale solcher Längsbeschleunigungssensoren von einem Berganfahrassistenten, häufig auch als "Hill Hold Control" HHC bezeichnet, genutzt werden, um zu erkennen, ob sich das Fahrzeug an einem Hang befindet. Falls dies zutrifft, kann der Berganfahrassistent gezielt die Bremsen des Fahrzeugs derart ansteuern, dass der Fahrer beim Anfahren am Hang unterstützt wird und ein Zurückrollen des Fahrzeugs vermieden wird.

In ähnlicher Weise kann das Signal von dem Längsbeschleunigungssensor auch von einem Halteassistenten, teilweise auch als "Automatic Vehicle Hold" AVH bezeichnet, genutzt werden, um beispielsweise bei Fahrzeugen mit Automatikgetriebe ein ungewolltes Anrollen des Fahrzeugs schon beim Lösen der Bremse zu verhindern, bis das Gaspedal tatsächlich betätigt wird.

Allerdings wurde beobachtet, dass in bestimmten Fahrsituationen und für bestimmte Fahrzeugtypen die das Längsbeschleunigungssignal nutzenden Fahr- bzw. Halteassistenzsysteme ihre Funktion nicht immer in optimaler Art ausführen.

EP 1 935 733 A1 beschreibt ein Verfahren und eine Vorrichtung zum Schätzen einer Longitudinallast, welche insbesondere auf ein Automobil wirkt. EP 1 298 020 A1 beschreibt ein Verfahren zur Ermittlung der Masse eines Kraftfahrzeugs unter Berücksichtigung unterschiedlicher Fahrsituationen.

### OFFENBARUNG DER ERFINDUNG

Das hierin vorgeschlagene Verfahren zum Verarbeiten eines Längsbeschleunigungssignals eines Längsbeschleunigungssensors in einem Fahrzeug ermöglicht eine zuverlässigere Auswertung solcher Signale und damit einhergehend zuverlässige Steuermaßnahmen seitens der Fahr- bzw. Halteassistenzsysteme.

Ideen und Aspekte zu der vorliegenden Erfindung basieren auf den folgenden Erkenntnissen:
Insbesondere im Sportwagen-Umfeld gibt es zunehmend Fahrzeuge, die mit elektronisch angesteuerten, mechanischen Vorrichtungen zum Anheben eines vorderen Teils des Fahrzeuges ausgestattet sind. Dies dient beispielsweise zur Vereinfachung des Befahrens von Rampen, Bordsteinen etc. und soll eine vordere Stoßstange bzw. eine Spoilerlippe schützen. Solche Funktionen können typischerweise
unterhalb von 50 km/h aktiviert werden, wobei eine zwangsweise Absenkung des Fahrzeugvorderteils typischerweise erst bei ca. 70 km/h bewirkt wird. Somit können sich beispielsweise ausgedehnte innerstädtische Fahrten mit entsprechend angehobenem Fahrzeugvorderteil ergeben.

Es wurde nun erkannt, dass das über einen gewissen Zeitraum bewirkte Anheben des Fahrzeugvorderteils und die damit einhergehende zeitweilige Lageveränderung der Fahrzeuglängsachse relativ zu einem Untergrund aufgrund der gezielten Anhebung der Karosserie des Fahrzeugs relativ zu einer Aufstandfläche von Rädern des Fahrzeugs auf den Untergrund zu gewissen Fehlern bei der Interpretation von Signalen von Längsbeschleunigungssensoren in dem Fahrzeug führen kann.

Es wird daher ein Verfahren gemäß Anspruch 1 vorgeschlagen, um diese bisher nicht erkannten und daher auch nicht berücksichtigten Einflüsse dadurch zu minimieren, dass das Längsbeschleunigungssignal basierend auf einem zuvor detektierten Fahrzeuglagesignal, das die zeitweilige Lageveränderung der Fahrzeuglängsachse relativ zu dem Untergrund aufgrund der gezielten Anhebung der Karosserie des Fahrzeugs angibt, und somit unter Berücksichtigung der zeitweiligen Lageveränderung durch ein solches Anheben zu korrigieren. Das Fahrzeuglagesignal wird erfindungsgemäß durch ein die Lageveränderung steuerndes oder hervorrufendes elektronisches Steuergerät des Anhebungssystems erzeugt.

Alternativ, aber nicht unter den beanspruchten Gegenstand fallend, kann das Fahrzeuglagesignal durch einen hierzu vorgesehenen Mechanismus zur Detektierung der Lageveränderung erzeugt werden.

Beim Korrigieren des Längsbeschleunigungssignals wird ein Winkel, um den die Fahrzeuglängsachse aufgrund der gezielten Anhebung der Karosserie bzw. eines Bereichs der Karosserie des Fahrzeugs teilweise verlagert wird, berücksichtigt.

Dabei wird ein Betrag der Höhe, um den das Vorderteil des Fahrzeugs zeitweilig angehoben wird, ermittelt. Aus diesem Betrag wird zusammen mit anderen Fahrzeugdaten wie insbesondere einem Radabstand berechnet, um welchen Winkel sich die Längsachse des Fahrzeugs verlagert. Die Information über diesen Winkel wird dazu verwendet, eine Information

über die tatsächliche Ausrichtung bzw. einen Neigungswinkel eines Untergrunds, auf dem sich das Fahrzeug aktuell befindet, zu erhalten und diese Information beim Auswerten eines Längsbeschleunigungssignals zu berücksichtigen , indem die aus dem Winkel resultierende Scheinbeschleunigung kompensiert wird.

Mit anderen Worten besteht die Idee darin, ein auf dem CAN (Controlled Area Network) eines Fahrzeugs zur Verfügung stehendes Signal, das angibt, ob bzw. wie stark ein Vorderteil eines Fahrzeugs zeitweilig gezielt angehoben wird (z.B. "active front lift"), zu verwenden, um die dadurch bewirkte Lageveränderung der Fahrzeuglängsachse und deren Einfluss auf die Signale des Längsbeschleunigungssensors zu kompensieren.

Ohne ein solches Kompensieren der Längsbeschleunigungssignale können Funktionen, die sich dieser Signale bedienen, bei einem zeitweiligen Anheben des Fahrzeugvorderteils negativ beeinflusst werden.

So kann es beispielsweise zu Situationen kommen, in denen das Fahrzeug an einem Hang bergab steht, durch das angehobene Fahrzeugvorderteil und den somit zurück in eine horizontale Ebene geneigten Beschleunigungssensor aber keine Längsbeschleunigung erkannt wird. Es kann somit keine korrekte Schätzung der Neigung des Untergrunds, auf dem sich das Fahrzeug aktuell befindet, durchgeführt werden. Dementsprechend kann das Fahrzeug von einem Anfahrassistenten oder einem Bremsunterstützungsassistenten nicht situationsgerecht unterstützt werden. Indem das Signal des Längsbeschleunigungssensors basierend auf dem aktuell detektierten Fahrzeuglagesignal korrigiert wird und somit die Lageveränderung der Fahrzeuglängsachse aufgrund des Anhebens des Fahrzeugvorderteils kompensiert wird, kann das korrigierte Längsbeschleunigungssignal einer Steuerung zum Steuern einer Bremsunterstützung bei einem Parken oder einem Anfahren an einem Hang zur Verfügung gestellt werden und somit ein Anfahr- bzw. Bremsassistent mit geeigneten Informationen versorgt werden.

In einer weiteren Ausführungsform kann das korrigierte Längsbeschleunigungssignal einer Überwachungseinrichtung zur Durchführung einer Offset-Kompensation aufgrund langfristiger Lageveränderung des Längsbeschleunigungssensors zur Verfügung gestellt werden.

Bei Fahrzeugassistenzsystemen werden meist Vorkehrungen getroffen, um zu erkennen, falls sich die Lage eines Längsbeschleunigungssensors nicht nur kurzfristig aufgrund von Bewegungen des gesamten Fahrzeugs verändert, sondern sich beispielsweise aufgrund von Verformungen einer Halterung des Beschleunigungssensors oder des Beschleunigungssensors selbst eine langfristige Lageänderung des Längsbeschleunigungssensors einstellt. Eine hierzu vorgesehene Überwachungseinrichtung kann eine solche langfristige Lageveränderung erkennen und daraufhin mit einem passenden Offset kompensieren.

Bisher blieb dabei jedoch unberücksichtigt, dass eine Lageveränderung des Längsbeschleunigungssensors beispielsweise beim Anheben des Fahrzeugvorderteils zwar langfristig, aber nicht permanent sein kann. Da eine Anhebung des Fahrzeugvorderteils bei entsprechend ausgestatteten Fahrzeugen mitunter erst bei Überschreiten von 70 km/h zwangsweise rückgängig gemacht wird und das Fahrzeug vorne wieder abgesenkt wird, kann es zu relativ langen Zeiträumen beispielsweise bei Stadtfahrten kommen, während derer die Fahrzeuglängsachse durch gezieltes Anheben des Fahrzeugvorderteils in ihrer Lage verändert wird. Um hieraus resultierend nicht eine fälschliche Offset-Kompensation durch die Überwachungsvorrichtung durchzuführen, kann dieser das korrigierte Längsbeschleunigungssignal, bei dem die zeitweilige Lageveränderung aufgrund des Anhebens des Fahrzeugvorderteils kompensiert wurde, zur Verfügung gestellt werden.

Weiterhin wird ein Fahrzeug gemäß Anspruch 4 vorgeschlagen.

### KURZE BESCHREIBUNG DER ZEICHNUNGEN

Nachfolgend werden Ausführungsformen der Erfindung unter Bezug auf die beigefügten Zeichnungen beschrieben, wobei sowohl die Beschreibung als auch die Zeichnungen nicht als die Erfindung einschränkend auszulegen sind.
Fig. 1 zeigt ein Fahrzeug mit einem Steuergerät zur Ausführung eines erfindungsgemäßen Verfahrens.
Fig. 2 veranschaulicht die Wirkung eines erfindungsgemäßen Verfahrens.

Die Figuren sind lediglich schematisch und nicht maßstabsgetreu.

### AUSFÜHRUNGSFORMEN DER ERFINDUNG

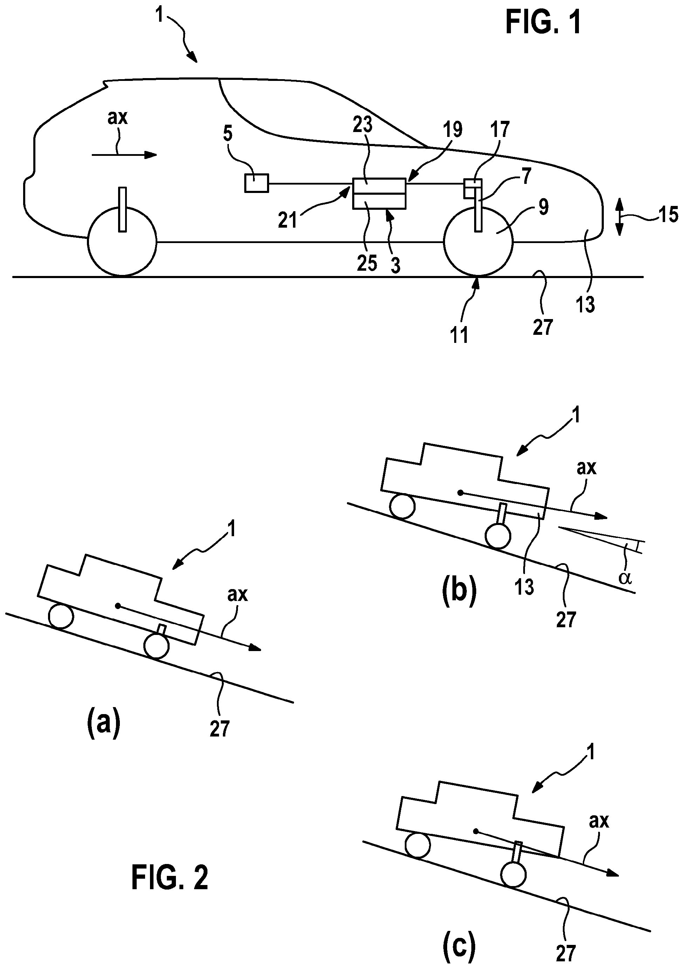

Fig. 1 zeigt ein Fahrzeug 1, bei dem mit Hilfe eines beispielsweise hydraulisch betriebenen Anhebungssystems 7 ein Fahrzeugvorderteil 13 zeitweilig angehoben werden kann, wie durch den Pfeil 15 veranschaulicht. Insbesondere bei tiefliegenden Sportwagen kann dadurch beispielsweise bei langsamen Stadtfahrten eine Berührung mit dem Untergrund vermieden werden, wobei bei Überschreiten einer Geschwindigkeitsgrenze das Fahrzeugvorderteil 13 automatisch abgesenkt werden und in die Normallage zurückversetzt werden kann, um eine Aerodynamik des Fahrzeugs zu verbessern.

Ein Steuergerät 3 kann mehrere Komponenten 23, 25 aufweisen. Die Komponenten können dabei sowohl in Form von Hardware als auch in Form von Software implementiert sein. Die einzelnen Komponenten können dabei zur Ausführung verschiedener Funktionen ausgebildet sein. Insbesondere kann das Steuergerät eine programmierbare Recheneinheit aufweisen, mit Hilfe derer verschiedene Steueraufgaben innerhalb des Fahrzeugs kontrolliert werden können.

Eine der Komponenten 23 kann hierbei dazu ausgelegt sein, ein Verfahren zum Verarbeiten eines Längsbeschleunigungssignals durchzuführen. Das Längsbeschleunigungssignal wird dabei von einem Längsbeschleunigungssensor 5 bereitgestellt und an einer Schnittstelle 21 dem Steuergerät 3 übergeben.

Das Steuergerät 3 verfügt ferner über eine zweite Schnittstelle 19, an dem es ein Fahrzeuglagesignal empfangen kann. Dieses Fahrzeuglagesignal wird von einer Steuerung 17 des Anhebungsystems 7 generiert und gibt eine zeitweilige Lageveränderung einer Fahrzeuglängsachse ax relativ zu einem Untergrund 27 aufgrund einer gezielten Anhebung beispielsweise des Fahrzeugvorderteils 13 relativ zu einer Aufstandfläche 11 von Rädern 9 des Fahrzeugs auf den Untergrund 27 an.

Wie in Fig. 2(a) dargestellt, ist die Fahrzeuglängsachse ax normalerweise parallel zum Untergrund 27 unter dem Fahrzeug 1 ausgerichtet.

Wenn allerdings, wie in Fig. 2(b) veranschaulicht, das Vorderteil 13 des Fahrzeugs 1 zeitweilig gezielt angehoben wird, kann es dazu kommen, dass die von dem Längsbeschleunigungssensor angenommene Fahrzeuglängsachse ax nicht mehr parallel zum Untergrund 27, sondern in einem Winkel α zu diesem ausgerichtet ist.

Da dies zu Fehlinterpretationen der von dem Längsbeschleunigungssensor gelieferten Signale durch einen diese Signale nutzenden Fahr- bzw. Bremsassistenten führen kann, ist das Steuergerät 3 des Fahrzeugs 1 dazu ausgelegt, das Längsbeschleunigungssignal von dem Längsbeschleunigungssensor 5 entsprechend um den Winkel α, um den die Fahrzeuglängsachse ax aufgrund der gezielten Anhebung der Karosserie des Fahrzeugs 1 zeitweilig verlagert wird, zu korrigieren. Auf diese Weise wird, wie in Fig. 2(c) dargestellt, ein Längsbeschleunigungssignal entlang einer korrigierten Fahrzeuglängsachse ax angegeben.

Mit einem solchen korrigierten Längsbeschleunigungssignal kann die Steuerung eines Assistenzsystems zum Steuern einer Bremsunterstützung beispielsweise beim Parken oder Anfahren an einem Hang zuverlässig situationsgerecht wirken und/oder eine Offset-Kompensation durch eine Überwachungseinrichtung eine gezielt bewirkte, zeitweilige und somit nicht permanente Lageveränderung des Längsbeschleunigungssensors aufgrund des Anhebens des Fahrzeugvorderteils 13 berücksichtigen.

## Patentansprüche

1. Verfahren zum Verarbeiten eines Längsbeschleunigungssignals eines Längsbeschleunigungssensors (5) in einem Fahrzeug (1) mit einem Anhebungssystem (7) zum Anheben eines Vorderteils (13) des Fahrzeugs.
wobei das Verfahren aufweist:
Erzeugen eines Fahrzeuglagesignals durch ein eine Lageveränderung steuerndes oder hervorrufendes elektronisches Steuergerät (17) des Anhebungssystems, wobei das Fahrzeuglagesignal eine zeitweilige Lageveränderung einer Fahrzeuglängsachse (ax) relativ zu einem Untergrund (27) aufgrund einer gezielten Anhebung eines Vorderteils des Fahrzeugs (1) mit dem Anhebungssystem relativ zu einer Aufstandfläche (11) von Rädern (9) des Fahrzeugs (1) auf dem Untergrund (27) angibt;
Bereitstellen des Fahrzeuglagesignals auf dem CAN-Bus des Fahrzeugs;
Detektieren des auf dem CAN-Bus bereitgestellten Fahrzeuglagesignals; und
Korrigieren des Längsbeschleunigungssignals unter Berücksichtigung der zeitweiligen Lageveränderung basierend auf dem detektierten Fahrzeuglagesignal,
wobei bei dem Korrigieren des Längsbeschleunigungssignals ein Winkel, um den die Fahrzeuglängsachse (ax) aufgrund der gezielten Anhebung des Vorderteils des Fahrzeugs (1) mit dem Anhebungssystem zeitweilig verlagert wird, berücksichtigt wird, wobei ein Betrag der Höhe, um den das Vorderteil des Fahrzeugs zeitweilig angehoben wird, ermittelt wird und aus dem Betrag der Höhe zusammen mit anderen Fahrzeugdaten, insbesondere einem Radabstand, der Winkel, um den die Fahrzeuglängsachse (ax) aufgrund der gezielten Anhebung des Vorderteils des Fahrzeugs (1) zeitweilig verlagert wird, berechnet wird.

2. Verfahren nach Anspruch 1, wobei das korrigierte Längsbeschleunigungssignal einer Steuerung zum Steuern einer Bremsunterstützung bei einem Parken oder einem Anfahren an einem Hang zur Verfügung gestellt wird.

3. Verfahren nach einem der Ansprüche 1 bis 2, wobei das korrigierte Längsbeschleunigungssignal einer Überwachungseinrichtung zur Durchführung einer Offset-Kompensation aufgrund langfristiger Lageveränderung des Längsbeschleunigungssensors zur Verfügung gestellt wird.

4. Fahrzeug (1), umfassend ein Anhebungssystem (7) zum Anheben eines Vorderteil: (13) des Fahrzeugs sowie ein Steuergerät (3), wobei das Anhebungssystem und das Steuergerät eingerichtet sind, das Verfahren gemäß einem der Ansprüche 1 bis 3 auszuführen.

## Claims

1. Method for processing a longitudinal acceleration signal from a longitudinal acceleration sensor (5) in a vehicle (1) with a lifting system (7) for lifting a front part (13) of the vehicle,
wherein the method comprises:
generating a vehicle position signal by means of an electronic control unit (17) of the lifting system that controls or induces a change in position, wherein the vehicle position signal indicates a temporary change in position of a vehicle longitudinal axis (ax) relative to an underlying surface (27) due to targeted lifting of a front part of the vehicle (1) using the lifting system relative to a contact area (11) of wheels (9) of the vehicle (1) on the underlying surface (27);
providing the vehicle position signal on the CAN bus of the vehicle;
detecting the vehicle position signal provided on the CAN bus; and
correcting the longitudinal acceleration signal taking into account the temporary change in position based on the detected vehicle position signal,
wherein, when correcting the longitudinal acceleration signal, an angle by which the vehicle longitudinal axis (ax) is temporarily displaced due to the targeted lifting of the front part of the vehicle (1) using the lifting system is taken into account, wherein a magnitude of the height by which the front part of the vehicle is temporarily lifted is determined, and the angle by which the vehicle longitudinal axis (ax) is temporarily displaced due to the targeted lifting of the front part of the vehicle (1) is calculated from the magnitude of the height together with other vehicle data, in particular a wheel distance.

2. Method according to Claim 1, wherein the corrected longitudinal acceleration signal is made available to a controller for controlling a braking assistance system when parking or starting on a slope.

3. Method according to one of Claims 1 to 2, wherein the corrected longitudinal acceleration signal is made available to a monitoring device for carrying out an offset compensation due to a long-term change in position of the longitudinal acceleration sensor.

4. Vehicle (1) comprising a lifting system (7) for lifting a front part (13) of the vehicle and a control unit (3), wherein the lifting system and the control unit are configured to carry out the method according to one of Claims 1 to 3.

## Revendications

1. Procédé permettant de traiter un signal d'accélération longitudinale d'un capteur d'accélération longitudinale (5) dans un véhicule (1) pourvu d'un système de relevage (7) pour relever une partie avant (13) du véhicule,
dans lequel le procédé présente les étapes consistant à :
générer un signal de position de véhicule par un appareil de commande électronique (17) du système de levage, qui commande ou provoque un changement de position, dans lequel le signal de position de véhicule indique un changement de position temporaire d'un axe longitudinal de véhicule (ax) par rapport au sol (27) en raison d'un relevage ciblé d'une partie avant du véhicule (1) à l'aide du système de relevage par rapport à une surface de contact (11) des roues (9) du véhicule (1) sur le sol (27) ;
fournir le signal de position de véhicule sur le bus CAN du véhicule ;
détecter le signal de position de véhicule fourni sur le bus CAN ; et
corriger le signal d'accélération longitudinale en tenant compte du changement de position temporaire sur la base du signal de position de véhicule détecté,
dans lequel, lors de la correction du signal d'accélération longitudinale, un angle est pris en compte selon lequel l'axe longitudinal de véhicule (ax) est décalé temporairement en raison du relevage ciblé de la partie avant du véhicule (1) à l'aide du système de relevage, dans lequel une valeur de la hauteur dont la partie avant du véhicule est relevée temporairement est établie, et à partir de la valeur de la hauteur, conjointement avec d'autres données de véhicule, en particulier un empattement, l'angle selon lequel l'axe longitudinal de véhicule (ax) est décalé temporairement en raison du relevage ciblé de la partie avant du véhicule (1) est calculé.

2. Procédé selon la revendication 1, dans lequel le signal d'accélération longitudinale corrigé est mis à la disposition d'un dispositif de commande pour commander un freinage assisté lors d'un stationnement ou d'un démarrage en côte.

3. Procédé selon l'une quelconque des revendications 1 à 2, dans lequel le signal d'accélération longitudinale corrigé est mis à la disposition d'un équipement de surveillance pour effectuer une compensation de décalage en raison d'un changement de position à long terme du capteur d'accélération longitudinale.

4. Véhicule (1), comprenant un système de relevage (7) pour relever une partie avant (13) du véhicule, ainsi qu'un appareil de commande (3), dans lequel le système de relevage et l'appareil de commande sont conçus pour exécuter le procédé selon l'une quelconque des revendications 1 à 3.
